(19) Europäisches Patentamt / European Patent Office / Office européen des brevets

(11) **EP 2 222 759 B1**

(12) **EUROPEAN PATENT SPECIFICATION**

(45) Date of publication and mention
of the grant of the patent:
**12.02.2014 Bulletin 2014/07**

(21) Application number: **08864844.9**

(22) Date of filing: **18.12.2008**

(51) Int Cl.:
*C08J 5/04* (2006.01)          *C08B 11/12* (2006.01)
*C08B 11/08* (2006.01)          *C08B 15/04* (2006.01)
*C08J 5/24* (2006.01)          *C09J 101/02* (2006.01)
*C09J 101/28* (2006.01)          *C09J 105/00* (2006.01)
*C09J 105/04* (2006.01)

(86) International application number:
**PCT/EP2008/067868**

(87) International publication number:
**WO 2009/080696 (02.07.2009 Gazette 2009/27)**

(54) **THERMOSETTING POLYSACCHARIDES**

WÄRMEHÄRTENDE POLYSACCHARIDE

POLYSACCHARIDES THERMODURCISSABLES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.12.2007 US 16370**

(43) Date of publication of application:
**01.09.2010 Bulletin 2010/35**

(73) Proprietor: **Akzo Nobel N.V.**
**6824 BM Arnhem (NL)**

(72) Inventors:
• **TRKSAK, Ralph**
**Manville**
**New Jersey 08835 (US)**
• **SOLAREK, Daniel, B.**
**Hillsborough**
**New Jersey 08844 (US)**
• **VITRY, Solweig**
**CH-6032 Emmen (CH)**
• **RODRIGUES, Klin, A.**
**Signal Mountain**
**Tennessee 37377 (US)**
• **YUAN-HUFFMAN, Qingwen, Wendy**
**Belle Mead**
**New Jersey 08502 (US)**
• **PUHLFUERSS, Andreas**
**07607 Eisenberg (DE)**

(74) Representative: **Akzo Nobel IP Department**
**Velperweg 76**
**6824 BM Arnhem (NL)**

(56) References cited:
**EP-A1- 1 193 288     EP-A1- 1 911 467**
**EP-A2- 0 819 725     WO-A1-97/11109**

**Description**

FIELD OF THE INVENTION

The present invention relates to composites produced using formaldehyde free binder systems based on non-starch polysaccharides and crosslinkers. The invention also relates to a process for producing these composites.

BACKGROUND OF THE INVENTION

Synthetic polymers are used in a wide variety of applications. In many applications, these synthetic polymers are crosslinked in order to achieve the required performance properties. For over sixty years, a large class of commercially important thermoset polymers has utilized formaldehyde-based crosslinking agents. Such crosslinking agents based on formaldehyde traditionally have provided an efficient and cost-effective binder to produce a variety of composite materials. Examples of formaldehyde-based crosslinking agents include melamine-formaldehyde, urea-formaldehyde, phenol-formaldehyde and acrylamide-formaldehyde adducts. With growing toxicity and environmental concerns, there has been an ongoing search to replace formaldehyde-based crosslinking systems. However, these alternative systems have suffered from significant deficiencies including high cost, low or slow cure, requiring end users to change their commercial high speed application equipment, emission of toxic components or volatile organic compounds other than formaldehyde, lack of moisture resistance, lack of adequate binding between the binder and the substrate, and low pH needed to cure the binder leading to corrosion issues in the production equipment.

Current formaldehyde-free binders systems do not perform as well as formaldehyde-based thermoset resins and tend to be far more expensive. Furthermore, both formaldehyde-based and formaldehyde free binder systems are derived from petroleum sources which are not renewable and sustainable. There is a need for formaldehyde-free binder systems that deliver the performance of a formaldehyde-based thermoset resin systems at reasonable economics, but are based on sustainable and renewable raw materials.

EP0817925 relates to a crosslinked cellulose composite film including a regenerated cellulose matrix containing a uniform dispersion of hemp fibers and a poly(ethylene oxide) plasticizer. A method for forming the film includes mixing a slurry of the hemp, poly(ethylene oxide) and a cellulose solvent with a cellulose solution, extruding the mixture, regenerating the cellulose from the solution to form the matrix containing hemp fibers, contacting with a crosslinking agent and then drying.

WO97/11109 relates to Biobased cross-linked compositions, methods of fabrication and structures, in particular biobased printed wiring boards using the compositions and methods of making the structures are described. Biobased materials such as lignin, crop oils, wood resins, tannins, and polysaccharides and combinations thereof are cross-linked, preferably using heat, a cross-linking agent, and an initiator. The materials fabricated have suitable properties for printed wiring boards which are made by impregnating a fibreglass or biobased cloth with an admixture of the biobased material, cross-linking agent and initiator which is processed by conventional methods to produce a printed wiring board.

EP1193288 relates to a composition containing a poly-functional molecule - a polysaccharide having a molecular weight of at least 10,000 and mono(hydroxyalkyl)urea and/or 2-oxazolidone crosslinking agents is disclosed. The poly-functional molecule contains at least two functional groups selected from the group consisting of carboxyl, anhydride and amine.

Preferably, the formaldehyde-free binder system should cure at relatively low temperatures (less than 200°). Furthermore, formaldehyde-free binders systems, especially those containing polyacrylic acid need a low pH (*e.g.*, less than three) to cure, which can result in corrosion issues in the process equipment. There is a need, therefore, for formaldehyde-free binder systems that can cure at a pH is greater than three, preferably in the neutral pH range.

Formaldehyde-based binder systems start to cross-link immediately after they are produced and need to be refrigerated during transport. Therefore, these systems have a very short period in which they need to be used i.e. poor pot life. Hence, there is a need for a formaldehyde free binder system that has good pot life. Finally, there is a need for a formaldehyde free binder system with good water resistance.

SUMMARY OF THE INVENTION

The present invention provides a composite produced using a formaldehyde free binder system and a mineral wool or lignocellulosic substrate. These formaldehyde free binders are a mixture of a non-starch polysaccharide and a crosslinker. In another aspect, the invention is a process for producing these composites by depositing a non-starch polysaccharide and a crosslinker on to a mineral wool or lignocellulosic substrate and curing.

BRIEF DESCRIPTION OF THE DRAWING

The invention is best understood from the following detailed description when read in connection with the accompanying drawings. Included in the drawings are the following figures:

Figure 1 is a graph depicting the quantitative measurement of binder resistance to water for the TGA Binder Retention Test conducted according to Example 14.
Figure 2 is a graph depicting the quantitative measurement of Binder Retention of fiberglass mats tested by the TGA method according to Example 15.
Figure 3 is a graph depicting the quantitative measurement of the results of the wet strength test conducted according to Example 16.
Figure 4 is a graph depicting the quantitative measurement of the results of the TGA Binder Retention test conducted according to Example 17.
Figure 5 is a graph depicting the quantitative measure of the results of Binder Retention of fiberglass mats tested by the TGA method of Starch B according to Example 18
Figure 6 is a graph depicting the quantitative measurement of the results of Binder Retention of fiberglass mats tested by the TGA method for Starch A according to Example 18.
Figure 7 is a graph depicting the quantitative measurement of the results of the Binder Retention of a fiberglass substrate using the TGA method for Starch B according to Example 19.

DETAILED DESCRIPTION OF THE INVENTION

For purposes of this invention, a "composite" is an article of manufacture or a product formed by treating a substrate with a formaldehyde free binder. Substrates useful in this invention include materials such as mineral wool and lignocellulosic substrates. The formaldehyde free binder is applied to the substrate usually in the form of an aqueous solution and cured to form the composite.

For the purposes of this invention, "mineral wool" means fibers made from minerals or metal oxides, which may be synthetic or natural and includes fiberglass, ceramic fibers, mineral wool and rockwool, also known as stone wool. Mineral wool is an inorganic substance used for insulation and filtering. Materials like fiberglass and ceramic fibers are mineral wools, by virtue of their consisting of minerals or metal oxides.

When the substrate is fiberglass, the fiberglass composites produced may be useful as insulation for heat or sound in the form of rolls or batts or loose-fill insulation; as a reinforcing mat for roofing and flooring products, ceiling tiles, flooring tiles, as a microglass-based substrate for printed circuit boards and battery separators; for filter stock and tape stock and for reinforcements in both non-cementatious and cementatious masonry coatings.

For the purposes of this invention, a "lignocellulosic substrate" is defined as lignocellulosic raw materials for producing lignocellulosic composites such as wood, flax, hemp, and straw, including wheat, rice and barley straw but not cellulosic fibers such as those used to make paper. In one aspect, the lignocellulosic substrate is wood in the form of particles or fragments. The lignocellulosic substrate can be processed into any suitable form and size, including various particles or fragments such as chips, flakes, fibers, strands, wafers, trim, shavings, sawdust, and combinations thereof. The binder can be deposited on the lignocellulosic substrate and cured to form a lignocellulosic composite. Lignocellulosic composites produced using the present formaldehyde-free binders include particleboard, oriented strand board (OSB), waferboard, fiberboard (including medium-density and high-density fiberboard), parallel strand lumber (PSL), laminated strand lumber (LSL), laminated veneer lumber (LVL), and similar products. One skilled in the art will recognize that the binders of this invention are different adhesives typically used to produce ply-wood or other laminated articles.

For purposes of this invention, "formaldehyde free binders" means that the binder contains ingredients that are substantially formaldehyde free and have a total formaldehyde content of about 100 ppm or less. In an embodiment of the invention, the formaldehyde free binders do not contain any ingredients that have formaldehyde, in which case the formaldehyde free binders are referred to as "completely formaldehyde free binders." "Formaldehyde free binders" according to this invention have at least one or more polysaccharide and at least one or more polysaccharide crosslinker. The polysaccharides can be derived from natural products including plant, animal and microbial sources. The polysaccharides are selected from cellulose, guar and alginates.

Preferably, the formaldehyde-free binder has at least one polysaccharide that is at least one non-starch polysaccharide.

For purposes of this invention, "non-starch polysaccharides" are defined as any polysaccharides but starch. The non-starch polysaccharides are hydroxy propyl cellulose (HPC) and carboxy methylcellulose (CMC), alginates and guars. In addition, low molecular weights versions of the non-starch polysaccharides are preferred since they are easier to apply. Commercially available non-starch polysaccharides are typically used as rheology modifiers. Therefore, their solution viscosities tend to be high. The non-starch polysaccharides are depolymerized such that the viscosity of a 10% solution is less than 10.000 mPa·s (10,000 cps), preferably less than 5.000 mPa·s (5,000 cps) and more preferably less than 1.000 mPa·s (1,000 cps) at 25°C. For purposes of this invention, the terms formaldehyde free binders and binders may be used interchangeably. Any method to depolymerize the non-starch polysaccharide may be used. One method to depolymerize the non-starch polysaccharide is to heat the aqueous solution of the material and introduce a free radical generator. Peroxides are good free radical generating systems. A particularly good system is a mixture of hydrogen peroxide and $Fe^{+2}$. However, any other method of depolymerizing the non-starch polysaccharide such as addition of strong acids or bases may be used and is within the scope of the invention.

Crosslinkers useful in this invention are termed polysaccharide crosslinkers. For the purpose of this invention, a "polysaccharide crosslinker" refers to any material that can react with a polysaccharide or its derivatives to form two or more bonds. Such bonds include covalent, ionic, hydrogen bonds or any combination thereof. For the purposes of this disclosure the terms polysaccharide crosslinker and crosslinker may be used interchangeably. Polysaccharides have a number of hydroxyl groups which can react with the functional groups on the polysaccharide crosslinkers. Examples of suitable crosslinkers include adipic/acetic mixed anhydride, epichlorohydrin, sodium trimetaphosphate, sodium trimetaphosphate/sodium tripolyphosphate, acrolein, phosphorous oxychloride, polyamide-epichlorohydrin crosslinking agents (such as POLYCUP® 1884 crosslinking resin available from Hercules), anhydride-containing polymers (such as SCRIPSET® 740, an ammonium solution of esterified styrene maleic-anhydride co-polymer available from Hercules), polycarboxylates (such as Alcosperse 602A from Alco Chemical) cyclic amide condensates (such as SUNREZ® 700C available from Omnova), zirconium and titanium complexes such as ammonium zirconium carbonate, potassium zirconium carbonate, titanium diethanolamine complex, titanium triethanolamine complex, titanium lactate, titanium ethylene glycolate, adipic acid dihydrazide, di-epoxides such as glycerol diglycidyl ether and 1,4 butanediol diglycidyl ether, and polyepoxide compounds such as a polyamine/polyepoxide resin (which is a reaction product of 1,2-dichloroethane and epichlorohydrin), di-functional monomers such as N,N'-methylenebisacrylamide, ethylene glycol dimethacrylate and ethylene glycol diacrylate, dianhydrides, acetals, silanes and polyfunctional silanes, blocked aldehydes (see for example US patents 4,625,029, 4,656,296 and 4,695,606) such as the reaction product of glyoxal and polyols such as glycerol, boron compounds such as sodium borate or borax, and combinations thereof. In exemplary embodiments of the invention, the polysaccharide crosslinker may be at least one non-starch polysaccharide crosslinker, at least one non-amylose starch crosslinker, at least one low amylose starch crosslinker or combinations thereof

It is within the scope of this invention for the polysaccharide crosslinker to react with the polysaccharide derivative. For example, if the non-starch polysaccharide is functionalized with carboxylic acid groups (CMC is an example of one such compound), these carboxylic acid groups can be reacted with polyols such as glycerol to form a crosslinked system.

In one embodiment, crosslinkers useful in the present invention react with the non-starch polysaccharides at a pH of around neutral. In a further aspect, the crosslinkers do not react with the non-starch polysaccharides at ambient temperatures and are activated at elevated temperatures, such as above 100°C. This lack of reaction between the crosslinker and the non-starch polysaccharide at ambient temperatures gives the aqueous binder system a longer pot life, which is an advantage during the manufacture of the composite.

Useful crosslinkers can form non-reversible bonds which give the binders long term stability. In one respect the crosslinkers can be adipic/acetic mixed anhydride, sodium trimetaphosphate, sodium trimetaphosphate/sodium tripolyphosphate, polyamide-epichlorohydrin crosslinking agents, polyamine/polyepoxide resin , cyclic amide condensates, 1,4-butanediol diglycidyl ether, glycerol diglycidyl ether, ammonium zirconium carbonate, potassium zirconium carbonate, titanium diethanolamine complex, titanium triethanolamine complex, titanium lactate, titanium ethylene glycolate, blocked aldehydes such as the reaction product of glyoxal and glycerol, sodium borate, dianhydrides and/or polyfunctional silanes.

Crosslinking of starches is well-known in the art. A description of crosslinking agents and reaction conditions can be found, for example, in Rutenberg, M. W. and D. Solarek, Starch Derivatives: Production and Uses, Acad. Press Inc., pp. 324-332 (1984). Also see, Würzburg, O.B., Modified Starches: Properties and Uses, CRC Press pp. 42-45 and 245-246 (1986), and Hullinger, C. H., "Production and uses of crosslinked starch" in Starch, Chemistry and Technology, Whistler and Paschall Eds, Academic Press, New York, Chpt. 19 (1967).

The amount of binder depends on the end use application of the composite. The amount of binder can vary from 0.1 to 50 weight percent by weight of the composite and is typically 1 to 30 weight percent by weight of the composite.

The amount of crosslinker in the formaldehyde free binder solution depends upon the type of crosslinker and the application in which the binder is being used in. Weight percent of the crosslinker in the formaldehyde free binder can be from about 0.1 to about 70 percent. In another aspect, it can be from about 1 to about 50 percent. In even another aspect, the crosslinker weight percent can be from about 2 to about 40 percent.

The formaldehyde free binder of the present invention may be applied to the substrate in any number of ways. If the substrate is fiberglass, the binder is generally applied in the form of an aqueous solution by means of a suitable spray applicator for distributing the binder evenly throughout the substrate formed by the fiberglass, such as a fiberglass mat. Typical solids of the aqueous solutions can be from about 1 to 50 percent. In one aspect, the solids content can be from 2 to 40 percent. In even another aspect, the solids content can be from 5 to 25 percent by weight of the aqueous binder solution. If the binder solution is sprayed, the viscosity of the binder solution may determine the maximum level of solids in the binder solution. The binder may also be applied by other means known in the art such as airless spray, air spray, padding, saturating and roll coating.

The composite is formed when the binder is applied to the substrate and then cured. For purposes of this disclosure, "curing" refers to any process that can facilitate the crosslinking reaction between the polysaccharide and the crosslinker. Curing is typically achieved by a combination of temperature and pressure. A simple way to effect the cure is to place the binder and the substrate in a high temperature oven. Typically, a curing oven operates at a temperature of from 110°C to 325°C. One advantage of the formaldehyde free binder system of the present invention is that it cures at relatively low temperature such as below 200°C. In another aspect, the formaldehyde free binder system cures below 180° C, and more preferably below 150° C. The composite can cure from 5 seconds to 15 minutes. In another aspect, the composite can cure in a time of from 30 seconds to 3 minutes. The cure temperature and pressure depends on the type and amount of crosslinker, type and level of catalyst used as well as the nature of the substrate. For example, higher pressures (greater than 170 507 Pa (1000 lbs/in$^2$)) are utilized in the manufacture of medium density fiberboard (MDF) board as compared to insulation.

The weight percent binder, based on the weight percent of substrate can vary from application to application and would depend upon the type of substrate. In general, weight percent binder, based on the weight of substrate is in the range of 1 to 50, more preferably in the range of 2 to 40 and most preferably in the range of 3 to 20.

The binder can be applied in the form of an aqueous solution. Generally, the pH of the aqueous binder solution is greater than about 3, and more preferably from about 3 to about 12. For non-starch polysaccharide binder systems specifically, in another aspect, the pH of the binder solution is preferably from about 4 to about 11, and more preferably from about 7 to about 10. For non-amylose and low amylose binder systems, in still another aspect, the pH of the binder solution is preferably from about 4 to about 10 and more preferably from about 6 to about 9.

Since the binder solution is typically sprayed on the viscosity needs to be relatively low. Moreover, the polysaccharides need to be in solution and not in a granular form so that it can be sprayed. In one aspect, the viscosity of 10% aqueous binder solution needs to be less than 10,000 mPa·s (10,000 cPs) at 25°C. In another aspect, the viscosity of the 10% aqueous binder solution needs to be less than 1,000 mPa·s (1,000 cPs) at 25°C. In even a further aspect, the viscosity of the 10% aqueous binder solution needs to be less than 200 mPa·s (200 cPs) at 25°C. Also, the binder solution should not cross-link at ambient temperature which gives the system a long enough pot life. However, it is within the scope of the invention for a small amount of cross-linking to occur in binder solution providing that the rise in viscosity of the 10% aqueous binder solution at 25° C is not more than 500 percent over a 24-hour period. In a further aspect, the rise in viscosity of the 10% aqueous binder solution at 25° C is not more than 100% over a 24-hour period. In even a further aspect, the rise in viscosity of the 10% aqueous binder solution at 25° C is not more than 50 percent over a 24-hour period. One skilled in the art will realize that the lower the original viscosity, the higher the rise in viscosity can be after 24 hours. Additionally, one skilled in the art will also recognize that the polysaccharides need to be cross-linked after the aqueous solution containing polysaccharide and cross-linker is applied to the substrate and during the curing process. However, while not preferred, it is within the scope of the invention for a small amount of cross-linking to occur during the production of the polysaccharide providing the viscosity limits detailed above are met.

The amount of crosslinker in the formaldehyde free binder solution depends upon the type of crosslinker and the application in which the binder is being used in. Weight percent of the crosslinker in the formaldehyde free binder can be from about 0.1 to about 70 percent. In another aspect, it can be from about 1 to about 50 percent. In even another aspect, the crosslinker weight percent can be from about 2 to about 40 percent.

An optional catalyst may be added to the binder formulation to allow the binder to cure at a faster rate or lower temperature or a pH range closer to neutral. One skilled in the art will recognize that the catalyst chosen depends upon the crosslinker used. Likewise, the amount of catalyst required depends on the crosslinker used. For example, if the crosslinker contains carboxylic acid groups, a phosphorus based catalyst such as sodium hypophosphite may be used. In this case, the sodium hypophosphite catalyst can be added from about 1 to 10 weight percent of the total weight of the binder. As a further example, if the crosslinker is sodium trimetaphosphate (STMP) or sodium tripolyphosphate, urea can be used as a catalyst. In this case, the urea catalyst can be added from about 1 to 50 weight percent of the total weight of the binder.

An additive may be added to the formaldehyde binder. For purposes of this invention an "additive" is defined as any ingredient which may be added to the binder to improve performance of the binder. These additives may include ingredients that give moisture, water or chemical resistance, as well as resistance to other environmental effects; and additives that give corrosion resistance as well as additives that enable the binder to adhere to the substrate or other surfaces that the end-use application may dictate. For example, if the composite is a fiberglass mat that is used in the production of flooring materials, it may be necessary for the fiberglass mat to adhere to the flooring material. A suitable hydrophobic additive may help with this surface adhesion. Examples of these additives include materials that can be added to the binder to provide functionality such as corrosion inhibition, hydrophobic additives to provide moisture and water repellency, additives for reducing leaching of glass, release agents, acids for lowering pH, antioxidants/reducing agents, emulsifiers, dyes, pigments, oils, fillers, colorants, curing agents, anti-migration aids, biocides, anti-fungal agents, plasticizers, waxes, anti-foaming agents, coupling agents, thermal stabilizers, flame retardants, enzymes, wetting agents, and lubricants. These additives can be about 20 weight percent or less of the total weight of the binder.

When the substrate is fiberglass, the polysaccharide can be derivatized with a reagent that introduces silane or silanol functionality into the polysaccharide. Conversely, an additive such as a small molecule silane may be introduced into the binder formulation before curing. This small molecule silane is chosen such that the organic part of the silane reacts with the polysaccharide under cure conditions while the silane or silanol portion reacts with the fiberglass substrate. This introduces a chemical bond between the binder and the substrate resulting in greater strength and better long term performance. Also, although the silane can be used as an additive in the binder system, the silane can be used as a cross-linker by itself.

The preferred additive is a hydrophobic additive that provides moisture, humidity and water resistance. For the purposes of this invention a "hydrophobic additive." can include any water repellant material. It can be a hydrophobic emulsion polymer such as styrene-acrylates, ethylene-vinyl acetate, polysiloxanes, fluorinated polymers such as polytetrafluroethylene emulsions, polyvinyl alcohol, polyethylene emulsions and polyesters. In addition, it can be a silicone or a silicone emulsion, wax or an emulsified wax or a surfactant. The surfactant itself can provide hydrophobicity, or it can be used to deliver a hydrophobic water insoluble material. The surfactant can be non-ionic, anionic, cationic or amphoteric. In one aspect, the surfactants are nonionic and/or anionic. Nonionic surfactants include, for example, alcohol ethoxylates, ethoxylated polyamines and ethoxylated polysiloxanes. Anionic surfactants include alkyl carboxylates and alkylaryl sulfonates, $\alpha$-olefin sulfonates and alkyl ether sulfonates. The preferred hydrophobic additives are polyvinyl alcohols or silicones.

EXAMPLES

The following non-limiting examples are introduced to exemplify the invention.

Example 1 -

A hydroxyethyl cellulose (QP 300 available from Dow) was depolymerized in the following manner. Thirty grams of QP 300 was introduced in to 270 g of deionized to water. Then the specified amounts (see Table 1) of Ferrous ammonium sulfate hexahydrate and of hydrogen peroxide ($H_2O_2$) solution (35% active) was added). In one example sodium persulfate was used as the depolymerization agent. The mixture was heated to temperature indicated (see Table 1) and held at that temperature for the time specified (see Table 1). The solutions were cooled to room temperature in the viscosities were measured initially and after a 24 hour period.

Table 1- Viscosities of depolymerized CMC solutions

| Ingredients | a | b | c | d | e | f | g | h | i | j | k |
|---|---|---|---|---|---|---|---|---|---|---|---|
| QP 300 in grams | 30 | 30 | 30 | 30 | 30 | 30 | 30 | 30 | 30 | 30 | 30 |
| DI Water in grams | 270 | 270 | 270 | 270 | 270 | 270 | 270 | 270 | 270 | 270 | 270 |
| $H_2O_2$ (35%) in grams | - | 2 | 2 | 2 | 2 | 2 | 2 | 2 | 4 | 6 | - |
| Ferrous ammonium sulfate hexahydrate in grams | - | 0.05 | 0.05 | 0.05 | 0.05 | 0.05 | 0.1 | 0.3 | 0.05 | 0.05 | 0.05 |
| Sodium Persulfate in grams | - | - | - | - | - | - | - | - | - | - | 0.7 |
| Temperature in °C | 60 | 60 | 80 | 100 | 60 | 60 | 60 | 60 | 60 | 60 | 60 |

(continued)

| Ingredients | a | b | c | d | e | f | g | h | i | j | k |
|---|---|---|---|---|---|---|---|---|---|---|---|
| Time in hours | 1 | 1 | 1 | 1 | 6 | 24 | 1 | 1 | 1 | 1 | 1 |
| | | | | | | | | | | | |
| % Solids in solution | 10 | 10 | 10 | 10 | 10 | 10 | 10 | 10 | 10 | 10 | 10 |
| Initial Viscosity (mPa·s) ((centipoise)) | 218000 | 508 | 85.6 | 42.6 | 51.2 | 43.2 | 1640 | 1936 | 980 | 536 | 4550 |
| Viscosity after 24 hours, (mPa·s) ((centipoise)) | 245300 | 126.4 | 77.4 | 40.8 | 61.6 | 55.2 | 244.8 | 488 | 145.6 | 115.5 | 2740 |

These data in Table 1 indicate that the viscosity of the CMC is greatly reduced following the procedure detailed above. The viscosity of the CMC is >200,000 cps for a 10% solution of the untreated material. However, the viscosities of the depolymerized CMC solutions are less than 10,000 cps and mostly less than 1000 cps for that of a 10 percent solution.

Example 2 -

A carboxymethyl cellulose (Aqualon CMC 9M3ICT available from Hercules, Inc., Wilmington, Delaware) was depolymerized in the following manner. Thirty grams of Aqualon CMC was introduced in to 270 g of deionized to water. 0.03 g of Ferrous ammonium sulfate hexahydrate and 1 to 3 g of hydrogen peroxide ($H_2O_2$) solution (35% active) was added (see Table 1). The mixture was heated to 60° C and held at that temperature for 30 minutes. The solutions were cooled to room temperature in the viscosities were measured initially and after a 24 hour period.

Table 2- Viscosities of depolymerized CMC solutions

| Ingredients | **A** | **B** | **C** |
|---|---|---|---|
| Aqualon CMC 9M3ICT | 30g | 30g | 30g |
| $H_2O_2$ (35%) | 1g | 2g | 3g |
| Ferrous ammonium sulfate hexahydrate | 0.03g | 0.03g | 0.03g |
| DI Water | 270g | 270g | 270g |
| % Solids in solution | 10 | 10 | 10 |
| Initial Viscosity (mPa·s) ((centipoise)) | 5344 | 315.2 | 254 |
| Viscosity after 24 hours (mPa·s) ((centipoise)) | 1632 | 165.2 | 103 |

These data in Table 2 indicate that the solution viscosities are fairly low (less than 1000 cps) which allows the materials to be easily applied.

Example 3-

The depolymerized CMC's of Example 2 in combination with a number of different cross-linkers was tested as a binder for fiberglass. The test protocol involved preparing a solution of the non-starch polysaccharide and the cross-linker. Glass microfiber filter paper sheets (20.3 x 25.4 cm, Cat No. 66227, Pall Corporation., Ann Arbor, Michigan) were then dipped into the binder solution and run through a roll padder. The coated sheets are then cured at 180°C for 20 minutes in an oven. The weight of the sheets before and after curing was measured and this is used to calculate the weight of dry binder as a percentage of filter paper weight or mat.

All of the systems tested had excellent dry tensile strength (comparable to that of a formaldehyde-based system). The wet tensile strengths were estimated in the following manner. The cured sheets are then soaked in water for 10 minutes and then were tested by pulling apart by hand. The wet tensile strength was given a qualitative rating on a scale of 1 to 5. A rating of 1 indicates that the sample does not have any wet tensile strength with a rating of 5 indicating that the tensile strength was similar to dry tensile strength (there is no drop in tensile strength on wetting). A formaldehyde-based resin system would expect to obtain a rating of 3 to 5 on this test. These data in Table 3 indicate that these systems have good wet tensile strength, especially when styrene maleic-anhydride co-polymer and the polyamide-epichlorohydrin resin were used as the crosslinker.

Table 3- Wet strength data

| Ingredients | A | B | C | D | E | F | G | H |
|---|---|---|---|---|---|---|---|---|
| Solution of Example 2a (grams) | 20 | 20 | 20 | 10 | - | - | - | - |
| Solution of Example 2b (grams) | - | - | - | - | 20 | 20 | 20 | 20 |
| STMP[1] | 2 | - | - | - | 2 | - | - | - |
| Na-Borate[2] | - | 4 | - | - | - | 4 | - | - |
| SC 740[3] | - | - | 2 | - | - | - | 2 | - |
| PC 6130[4] | - | - | - | 1 | - | - | - | 2 |
| DI Water in [g] | 20 | 20 | 20 | 20 | 20 | 20 | 20 | 20 |
| | | | | | | | | |
| pH | **10.11** | **9.09** | **8.41** | **8.97** | **10.14** | **8.85** | **8.52** | **8.87** |
| % Solids of binder solution | 5.2 | 5.0 | 5.2 | 3.5 | 5.2 | 5.0 | 5.2 | 5.2 |
| | | | | | | | | |
| Wt percent Cross linker on depolymerized CMC | 10 | 10 | 10 | 10 | 10 | 10 | 10 | 10 |
| Weught percent binder on mat | 40.2 | 35.8 | 41.2 | 30.0 | 38.7 | 35.4 | 35.9 | 54.1 |
| Wet strenght test | 2 | 2-3 | 4-5 | 5 | 2 | 2-3 | 4-5 | 5 |

[1]STMP - sodium trimetaphosphate
[2]Na-Borate - sodium borate decahydrate
[3] SC 740 - SCRIPSET® SC740 - Ammonium solution of esterified styrene maleic-anhydride co-polymer available from Hercules, Inc., Wilmington, Delaware
[4] PC 6310 - POLYCUP® 6310- polyamide-epichlorohydrin crosslinking agent available from Hercules, Inc., Wilmington, Delaware

Example 4 -

A non-starch polysaccharide in combination with a number of different cross-linkers was tested as a binder for fiberglass. The non-starch polysaccharide was two different molecular weights of hydroxyethyl celluloses (HEC). The powdered HEC was dissolved by mixing in water (QP-300 as a 5% solution and QP-09-L as a 9% solution) and cooking at 60° C for 30 to 60 minutes until a clear solution was obtained. The sheets were coated with these non-starch polysaccharides and tested as described in Example 3 except that the coated sheets were cured at 165°C for 20 minutes in an oven instead of 180°C.

All of the systems tested had excellent dry tensile strength (comparable to that of a formaldehyde-based system). The data in Table 4 and Table 5 indicate that these systems have good wet tensile strength, especially at higher cross-linker levels.

Table 4 -

| HEC | | QP-300[1] | | | QP-300 | | |
|---|---|---|---|---|---|---|---|
| Level of Cross-linker[2] | Crosslinker | Wet strenght | pH | Binder wt %[3] | Wet strenght | pH | Binder wt % |
| 1% | STMP[4] | 2.5 | 5.6 | 1.5 | 2 | 10.5 | 6.1 |

(continued)

| HEC | | QP-300[1] | | | QP-300 | | |
|---|---|---|---|---|---|---|---|
| Level of Cross-linker[2] | Crosslinker | Wet strenght | pH | Binder wt %[3] | Wet strenght | pH | Binder wt % |
| 1% | Na-Borate[5] | 1 | 7.4 | 3.5 | 1.5 | 9.6 | 6.9 |
| 1% | PC 6310[6] | 4 | 5.5 | 1.7 | 1 | 9.1 | 7.7 |
| 1% | SC 740[7] | 3 | 6.3 | 3.8 | 3 | 9.0 | 5.7 |
| 10% | STMP | 2.5 | 5.9 | 8.0 | 2 | 10.4 | 6.1 |
| 10% | Na-Borate | 3 | 9.0 | 4.6 | 3 | 9.0 | 4.6 |
| 10% | PC 6310 | 5 | 5.0 | 12.7 | 5 | 8.7 | 4.6 |
| 10% | SC 740 | 5 | 8.1 | 6.2 | 5 | 8.1 | 6.2 |

[1] QP-300 - hydroxy ethyl cellulose available from Dow Chemicals
[2] Weight percent cross-linker based on weight of HEC
[3] Weight percent binder based on weight of fiberglass mat (Glass microfiber filter paper)
[4] STMP - sodium trimetaphosphate
[5] Na-Borate - sodium borate decahydrate
[6] PC 6310 - POLYCUP® 6310- polyamide-epichlorohydrin crosslinking agent available from Hercules, Inc., Wilmington, Delaware
[7] SC 740 - SCRIPSET® SC740 - Ammonium solution of esterified styrene maleic-anhydride co-polymer available from Hercules, Inc., Wilmington, Delaware

Table 5-

| HEC | | QP-09-L[8] | | | QP-09-L | | |
|---|---|---|---|---|---|---|---|
| Level of Cross-linker | Crosslinker | Wet strenght | pH | Binder wt % | Wet strenght | pH | Binder wt % |
| 1% | STMP | 1 | 6.0 | 9.7 | 1 | 10.7 | 14.9 |
| 1% | Na-Borate | 1 | 7.9 | 11.9 | 1 | 9.1 | 15.6 |
| 1% | PC 6310 | 2.5 | 5.8 | 12.9 | 2.5 | 9.3 | 11.8 |
| 1% | SC 740 | 2.5 | 6.8 | 14.0 | 2.5 | 8.2 | 12.5 |
| 10% | STMP | 1 | 6.1 | 17.0 | 1 | 10.4 | 17.9 |
| 10% | Na-Borate | 1 | 9.1 | 14.1 | 1 | 9.1 | 14.1 |
| 10% | PC 6310 | 5 | 5.1 | 15.6 | 5 | 8.4 | 14.1 |
| 10% | SC 740 | 4 | 8.0 | 15.6 | 4 | 8.0 | 15.6 |

[8] QP-09-L - hydroxy ethyl cellulose available from Dow Chemicals

Example 5-

Two different carboxy methyl celluloses (CMC) were tested according to the protocol described in Example 3. The powdered CMC was dissolved by mixing in water (Finnfix WRM as a 5% solution and Aqualon CMC 9M3ICT as a 4% solution) and cooking at 60° C for 30 to 60 minutes until a clear solution was obtained.

Table, 6-

| CMC | | | Finnfix WRM | | | Finnfix WRM | | |
|---|---|---|---|---|---|---|---|---|
| Level of Cross-linker | Crosslinker | | Wet strenght | pH | Binder wt % | Wet strenght | pH | Binder wt % |
| 1% | STMP | | 1 | 6.0 | 7.7 | 1.5 | 11.8 | 6.9 |
| 1% | Na-Borate | | 1 | 6.1 | 7.7 | 2.5 | 9.6 | 7.1 |
| 1% | PC 6310 | | 3 | 6.0 | 6.6 | 2.5 | 9.1 | 6.2 |
| 1% | SC 740 | | 1 | 6.1 | 6.7 | 2 | 8.2 | 7.2 |
| 10% | STMP | | 1 | 5.9 | 8.0 | 1 | 11.1 | 8.4 |
| 10% | Na-Borate | | 1 | 9.3 | 7.1 | 1 | 9.3 | 7.1 |
| 10% | PC 6310 | | 5 | 5.5 | 6.4 | 5 | 8.8 | 7.8 |
| 10% | SC 740 | | 4 | 8.2 | 7.5 | 4 | 8.2 | 7.5 |
| [9]Finnfix WRM -Carboxy methyl cellulose (CMC) available from Finnfix | | | | | | | | |

Table, 7-

| CMC | →→ | | Aqualon CMC 9M3ICT[10] | | | Aqualon CMC 9M3ICT | | |
|---|---|---|---|---|---|---|---|---|
| Level of Cross-linker | Crosslinker | | Wet strenght | pH | Binder wt % | Wet strenght | pH | Binder wt % |
| 1% | STMP | A | 2.5 | 7.6 | 6.9 | 2.5 | 11.2 | 7.4 |
| 1% | Na-Borate | B | 2 | 9.4 | 7.1 | 2 | 9.4 | 7.1 |
| 1% | PC 6310 | C | 5 | 7.5 | 2.8 | 5 | 8.7 | 6.1 |
| 1% | SC 740 | D | 3 | 8.3 | 6.6 | 3 | 8.3 | 6.6 |
| 10% | STMP | E | 2.5 | 7.1 | 6.6 | 3 | 11.0 | 7.3 |
| 10% | Na-Borate | F | 2 | 9.5 | 7.2 | 2 | 9.5 | 7.2 |
| 10% | PC 6310 | G | 5 | 7.2 | 3.4 | 5 | 8.3 | 6.4 |
| 10% | SC 740 | H | 4.5 | 9.0 | 8.8 | 4.5 | 9.0 | 8.8 |
| [10]Aqualon CMC 9M3ICT -Carboxy methyl cellulose (CMC) available from Hercules | | | | | | | | |

The data in Tables 6 and 7 indicate that the combination of CMC's and crosslinkers tested were suitable very good formaldehyde free binders.

Example 6-

A non-starch polysaccharide namely, an alginate was tested according to the protocol described in Example 3. The powdered alginate was dissolved by mixing in water (Kelgin A5C542 as a 5% solution) and cooking at 60° C for 30 to 60 minutes until a clear solution was obtained.

Table, 8-

| Alginate | →→ | | Kelgin A5C542[11] | | | Kelgin A5C542 | | |
|---|---|---|---|---|---|---|---|---|
| Level of Cross-linker | Crosslinker | | Wet strenght | pH | Binder in % | Wet strenght | pH | Binder in % |
| 1% | STMP | A | 1 | 6.9 | 14.3 | 1 | 10.1 | 17.9 |
| 1% | Na-Borate | B | 1 | 7.5 | 13.8 | 1 | 9.0 | 17.4 |
| 1% | PC 6310 | C | 3.5 | 6.8 | 14.3 | 4 | 8.4 | 14.8 |

(continued)

| Alginate | →→ | | Kelgin A5C542[11] | | | Kelgin A5C542 | | |
|---|---|---|---|---|---|---|---|---|
| Level of Cross-linker | Crosslinker | | Wet strenght | pH | Binder in % | Wet strenght | pH | Binder in % |
| 1% | SC 740 | D | 2 | 7.2 | 15.3 | 1 | 8.2 | 16.7 |
| 10% | STMP | E | 1 | 6.3 | 17.8 | 1 | 10.1 | 17.7 |
| 10% | Na-Borate | F | 1 | 9.2 | 16.8 | 1 | 9.2 | 16.8 |
| 10% | PC 6310 | G | 5 | 5.4 | 17.1 | 5 | 8.3 | 23.0 |
| 10% | SC 740 | H | 4 | 8.1 | 15.8 | 4 | 8.1 | 15.8 |
| [11] Kelgin A5C542-Alginate available from Kelgin | | | | | | | | |

These data in Table 8 indicate the alginate with a series of cross-linkers of very good formaldehyde free binders systems.

Example 7-

Medium density fiberboard (MDF) samples is made in the lab using the following protocol:

850 g of wood pulp was taken in a rotary mixer. The binder solution is sprayed onto the wood pulp with constant mixing. The binder is a mixture of the polysaccharide of Example 2a, 10 weight percent of active Polycup 6130 (cross-linker available from Hercules) based on the weight of the polysaccharide and 5 weight percent of active silicone (Dow Corning 75SF Silicone Emulsion). The mixed wood pulp with binder is fed through a screen into a mold which is 35 x 25 x 10 cm $^3$ in size, such that the wood pulp is evenly distributed in the mold. A 150 lb weight is then placed on the preformed medium density fiberboard for five minutes. The medium density fiberboard is then cured by placing it between the heating plates of a pressurized chamber. The pressure in this chamber is set to 2300 to 2800 lbs/in$^2$ and the temperature is maintained at 160 °C. The cured medium density fiberboard using the binder of this invention was found to have acceptable physical properties.

The above Examples 1-7 illustrate that a non-starch polysaccharide with a crosslinker has similar performance to a formaldehyde-based binder system.

Example 8 - (Comparison)

The efficacy of a binder system is measured using the test procedure below -

1. Commercial glass wool having a binder (Ultimate) was cut into small pieces. Approximately 15 to 20g of glass wool was weighed in an aluminium pan and placed into an oven at 450°C for at least three hours or until the weight is constant in order to eliminate the binder (loss weight was around 5-7%). The color of the glass wool turned from yellow to gray.
2. The glass wool fibers were placed into a 1000 ml jar containing 500g of alumina balls. A powder was produced from the glass wool by placing the jar in a ball mill for about two minutes. The fibers were visible under a microscope using a magnification of 100.
3. The powder was sifted.
4. A binder solution was prepared in a 100mL beaker by combining 1 gram of binder with 2 grams of water and 10 g of the powder prepared above, mixing well, resulting in a workable paste that does not flow.
5. 5 mm pellets were made from a small portion of the paste by using the rear end of a cork drill. The pellets were cured by placing them in a microwave oven at 500W and drying them for 20 minutes. Alternatively, the pellets can be cured in an oven for 2 hours at 150°C.
6. The cured pellets were placed in a plastic bottle containing 100 ml of water. The bottle was then placed in a water bath set at 70°C. Samples were tested every 24 hours by taking a pellet from the bottle, drying first with a paper towel and then drying once again in an oven at 100°C for two hours. If the dried pellet is strong and cannot be crushed between one's fingers, the binder system is deemed to still be effective. The longer the pellet survives this test, the better the performance of the binder system.

A standard formaldehyde based binder (phenolic resin) survives 1 to 4 days of the above test. Excellent binder systems last up to 11 days. If the binding performance is below par, the samples disintegrate immediately.

A number of non-amylose starches crosslinked with crosslinkers were tested according to the protocol detailed above. The data on these samples are listed in the Table 9 below.

Table 9 -

| Non-amylose starch | Crosslinker | STMP | | POLYCUP ® 1884 | | SCRIPSET ® SC740 | | BACOTE® 20 | | ZIRMEL® 1000 | |
|---|---|---|---|---|---|---|---|---|---|---|---|
| | Weight percent of crosslinker based on weight of binder | 1% | | 3% | | 3% | | 3% | | 3% | |
| | | Days | pH | Days | pH | Days | pH | Days | pH | Days | pH |
| 3% OSA modified degraded waxy maize starch, WF 40 | | 26 | 10.3 | 10 | 8.7 | >10 | 8.4 | 0 | 9.3 | 3 | 9.4 |
| 3% OSA modified degraded waxy maize starch, WF 85 | | 0 | 10.1 | 0 | 8.7 | 3 | 8.7 | 0 | 9.0 | 0 | 9.4 |
| Degraded waxy maize starch, WF 40 | | >10 | 10.0 | >10 | 8.6 | 10 | 8.6 | - | | - | |
| Degraded waxy maize starch, WF 70 | | >10 | 10.1 | >10 | 8.7 | >10 | 8.9 | 3 | 9.9 | 3 | 9.9 |

OSA - octenyl succinic anhydride STMP - sodium trimetaphosphate POLYCUP® 1884 - polyamide-epichlorohydrin crosslinking agent available from Hercules, Inc., Wilmington, Delaware SCRIPSET® SC740 - Ammonium solution of esterified styrene maleic-anhydride co-polymer available from Hercules, Inc., Wilmington, Delaware BACOTE® 20 - ammonium zirconium carbonate solution available from MEL / MEI Chemicals ZIRMEL® 1000 - potassium zirconium carbonate available from MEL / MEI Chemicals

Waxy maize contains 0% amylose and is a non-amylose starch. These data indicate that formaldehyde free binders using non-amylose starches form excellent binder systems.

Example 9- (Comparison)

A starch system as described in U.S. Patent No. 5,895,804 was tested as a binder for fiberglass mats at pH 8 and compared to formaldehyde free binder systems of this invention. The test protocol involves diluting the binder to 12.5% solids. Glass microfiber filter paper sheets (20.3 x 25.4 cm, Cat No. 66227, Pall Corporation., Ann Arbor, Michigan) are then dipped into the binder solution and run through a roll padder. The coated sheets are then cured at 175°C for 10 minutes by oven. Typical add-on values are 40%, dry binder weight as a percentage of filter paper weight. The cured sheets are then soaked in water for 60 minutes and tensile strength is measured using an Instron equipped with self identifying tension load cell.

Table 10-

| Binder | Weight percent of crosslinker based on weight of binder | pH | Tensile strength (PSI) | (N/cm$^2$) |
|---|---|---|---|---|
| arnioca, 3% OSA-modified, 85 water fluidity and 5,000 MW poly(acrylic acid) crosslinker | 16.6 | 8.0 | 0* | 0* |
| arnioca, 3% OSA-modified, 85 water fluidity and SCRIPSET® SC740 | 16.6 | 8.7 | 72 | 49,6 |
| arnioca, 3% OSA-modified, 85 water fluidity and SCRIPSET® SC740 | 33.3 | 9.3 | 192 | 132.4 |
| * tensile strength was below the level measurable by the Instron | | | | |

The data in Table 10 above indicates that starch systems with a polyacrylate binder have poor wet tensile strength when cured at pH 8. By comparison, non-amylose starches in combination with non-amylose starch crosslinkers according to the present invention have excellent wet tensile strength when cured in 8 to 10 pH range. This indicates that binder systems of this invention have good moisture resistance and excellent long-term properties. In addition, since the binder cures at pH's greater than 3, the systems of the present invention (unlike those of U.S. Patent No. 5,895,804) are not corrosive.

Example 10- (Comparison)

The wet tensile strength of a number of binder systems was tested using the protocol detailed an Example 9. After the 60 minutes soaking, the cured sheets were tested by pulling apart by hand. The wet tensile strength was given a qualitative rating on a scale of 1 to 5. 1 being no wet tensile strength, 5 being wet tensile strength similar to dry tensile strength.

Table 11-

| Binder | | | Qualitative Wet Tensile Strength on a scale of 1 to 5 |
|---|---|---|---|
| Starch | Cross-linker | Hydrophobic additive | |
| Acid degraded Amioca starch WF 40 | 30 weight percent sodium borate based on weight of the starch | None | 1 |
| Acid degraded Amioca starch WF 40 | 30 weight percent sodium borate based on weight of the starch | 10 weight percent silicone (Dow Corning 75SF Silicone Emulsion) | 5 |
| Acid degraded Amioca starch WF 40 | 30 weight percent sodium borate based on weight of the starch | 10 weight percent polyvinyl alcohol (Celvol 103 from Air Products) | 5 |

The data in Table 11 indicate that the polyvinylalcohol and the silicones are suitable hydrophobic additives that improve wet tensile strength.

Example 11- (Comparison)

A number of non-amylose starches (available from National Starch and Chemical) were tested using the procedure of Example 8 but using stone wool as a substrate. The number of days that the pellets survived in the water bath is listed in Table 12 below.

Table 12-

| | Number of days the pellets survived in a water bath at 70° C. | | Number of days the pellets survived in a water bath at 70° C. | | Number of days the pellets survived in a water bath at 70° C. | Number of days the pellets survived in a water bath at 70° C. |
|---|---|---|---|---|---|---|
| Cross-linker | STMP at pH 10. | | STMP at pH 12 | | SCRIPSET® SC740 at pH 7.5 | SCRIPSET® SC740 at pH 10 |
| Weight percent crosslinker based on weight of starch | 1% | 2% | 1% | 2% | 5% | 5% |
| Starch | | | | | | |
| Cationic com starch | 6 | 12 | 12 | 6 | | |
| Acid converted corn starch, 28% amylose | 18 | 18 | 18 | 17 | 21 | 3 |
| Acid converted waxy maize | 1 | 13 | 13 | 14 | | |
| Fluidized waxy maize | 20 | 19 | 19 | 19 | 21 | 21 |
| Modified waxy maize | 21 | 21 | 20 | 20 | 9 | 9 |
| Modified waxy maize | 20 | 20 | 20 | 20 | | |
| Cationic waxy maize | 18 | 18 | 17 | 17 | 9 | 9 |
| Cationic waxy maize | 17 | 16 | 16 | 16 | | |
| OSA-modified waxy maize | 20 | 20 | 20 | 20 | 9 | 9 |
| OSA-modified waxy maize | 6 | 6 | 6 | 13 | | |

The data in Table 12 indicate that these non-amylose starch binders have excellent water resistance since the binder does not disintegrate even when soaked in water for 5 days or more.

Example 12- (Comparison)

Medium density fiberboard (MDF) samples were made in the lab using the following protocol:

850 g of wood pulp was taken in a rotary mixer. The binder solution is sprayed onto the wood pulp with constant mixing. The binder is a mixture of Acid degraded Amioca starch WF 60, 10 weight percent of active Polycup 6130 (cross-linker available from Hercules) based on the weight of the starch and 5 weight percent of active silicone (Dow Corning 75SF Silicone Emulsion). The mixed wood pulp with binder is fed through a screen into a mold which is 35 x 25 x 10 cm$^3$ in size, such that the wood pulp is evenly distributed in the mold. A 150 lb weight is then placed on the preformed medium density fiberboard for five minutes. The medium density fiberboard is then cured by placing it between the heating plates of a pressurized chamber. The pressure in this chamber is set to 2300 to 2800 lbs/in$^2$ and the temperature is maintained at 160 °C. The cured medium density fiberboard using the binder of this invention was found to have acceptable physical properties.

Example 13- (Comparison)

A series of formaldehyde free binder solutions were prepared by mixing aqueous starch solutions with aqueous solutions of cross-linker. These solutions contained 20 weight percent cross-linker based on the weight of the starch. These solutions were then diluted with water to obtain a final solution containing 10% solids. The viscosity (see Table 13 below) of these formaldehyde free binder solutions were measured at 25° C both immediately and after a 24-hour period.

Table 13-

| Ingredient (% solids in solution) | A | B | C | D | E | F | G | H | I | J | K |
|---|---|---|---|---|---|---|---|---|---|---|---|
| OSA-modified waxy maize (27.8%) | 90g | 90g | 90g | - | - | - | - | - | - | - | - |
| OSA Degraded waxy maize (25.7%) | - | - | - | 97.3g | 97.3g | 97.3g | - | - | - | - | - |
| OSA-modified waxy maize (32%) | - | - | - | - | - | - | 78.1g | 78.1g | 78.1g | 78.1g | - |
| Fluidity Hylon VII (10%) | | | | | | | | | | | 300 |
| STMP (10%) | 50g | - | - | 50g | - | - | 50g | - | - | - | - |
| SCRIPSET SC740 (10%) | - | 50g | - | - | 50g | - | - | 50g | - | - | - |
| POLYCUP® 6130[1] (10%) | - | - | 50g | - | - | 50g | - | - | 50g | - | - |
| Borate (5%) | - | - | - | - | - | - | - | - | - | 100g | - |
| DI Water | 160g | 160g | 160g | 153g | 153g | 153g | 172g | 172g | 172g | 122g | - |
| | | | | | | | | | | | |
| pH | 10.71 | 8.88 | 8.15 | 10.27 | 8.8 | 8.27 | 10.92 | 8.95 | 8.65 | 9.44 | 12 |
| % Solids in Blinder solution | 10 | 10 | 10 | 10 | 10 | 10 | 10 | 10 | 10 | 10 | 10 |
| | | | | | | | | | | | |
| Viscosity (mPa·s) (cPs) t= 0 | 51.4 | 57 | 100.2 | 46.6 | 58.3 | 72.1 | 11.6 | 22 | 29.7 | 26.1 | gel* |
| Viscosity (mPa·s) (cPs) t= 24 hrs | 60.9 | 65.8 | 121 | 56.6 | 71 | 76.2 | 23.3 | 32.7 | 40.7 | 31.6 | gel* |

POLYCUP® 6130- polyamide-epichlorohydrin crosslinking agent available from Hercules, Inc., Wilinington, Delaware
*forms a gel and viscosity is so high that it cannot be measured.

The data in Table 13 indicate that the combinations of non-amylose starches and cross-linker's have viscosities of less than 200 cPs at 25° C as 10% solutions. Moreover these viscosities are stable over a 24 hour period, since the solutions do not show a significant rise in viscosity (>100%). By contrast, high amylose starches (even without the presence of cross-linker) form a gel at 25°C which makes it difficult to apply these materials by conventional means such as spraying. Therefore, the combination of non-amylose starches and cross-linkers have low viscosities so that they can be applied by conventional means such as spraying. In addition, the viscosity does not change with time allowing for a good pot life.

Example 14- (Comparison)

A fluidity waxy maize was tested with a series of silanes as cross-linkers for wet strength using the protocol detailed in Example 10. The silanes were added at 1 and 3 weight percent of the starch respectively. The fiberglass mats were cured at 180°C for 20 minutes in an oven. Since all the binders cured at pH's greater than 3, the systems of the present invention are not corrosive.

Table 14-

| Ingredients | A | B | C | D | E | F | G |
|---|---|---|---|---|---|---|---|
| OSA-modified waxy maize (25.6% solution) in [g] | 10 | 10 | 10 | 10 | 10 | 10 | 10 |
| Silquest® A1524 in [g] | - | 0.0257 | 0.0771 | - | - | - | - |
| Silquest A187 in [g] | - | - | - | 0.0257 | 0.0771 | - | - |
| Silquest A171 in [g] | - | - | - | - | - | 0.0265 | 0.0795 |
| Water in [g] | 25 | 25 | 25 | 25 | 25 | 25 | 25 |
| Weight % Silane on starch | - | 1.0 | 3.0 | 1.0 | 3.0 | 1.0 | 3.0 |
| pH | 10.37 | 10.07 | 10.25 | 10.13 | 10.11 | 10.07 | 10.4 |
| Wet strength test | 2 | 4.5 | 4.5 | 4.5 | 4.5 | 4.5 | 4.5 |
| Silquest A1524 is gamma Ureidopropyltrimethoxysilane available form GE Advanced Materials, Wilton, Connecticut. Silquest A187 is gamma Glycidoxypropyltrimethoxysilane available form GE Advanced Materials, Wilton, Connecticut. Silquest A171 is Vinyltrimethoxysilane available form GE Advanced Materials, Wilton, Connecticut | | | | | | | |

The data in Table 14 show that the silane can be used as a cross-linker and increases the adhesion of the binder to the fiberglass substrate since the wet strength improves dramatically.

The "Binder Retention" after the fiberglass mats were soaked in water was measured by a TGA ramp test (ramp rate = 10°C/min, ramping from room temperature to 600°C, with N2 as purging gas). The glass mats were soaked in DI water for 10-minute followed by drying at ambient condition overnight. The TGA test was conducted on original un-soaked fiberglass mats and on the soaked/re-dried fiberglass mats. TGA weight loss at 600C was registered as the "binder content" for each fiberglass mat. "Binder Retention" of a fiberglass mat is defined as following:

$$\text{Binder Retention} = (\text{Binder Content of soaked mat} / \text{Binder Content of un-soaked mat}) \times 100\%$$

This TGA Binder Retention test gave quantitative measurement of binder resistance to water. Example 14 TGA Binder Retention Test

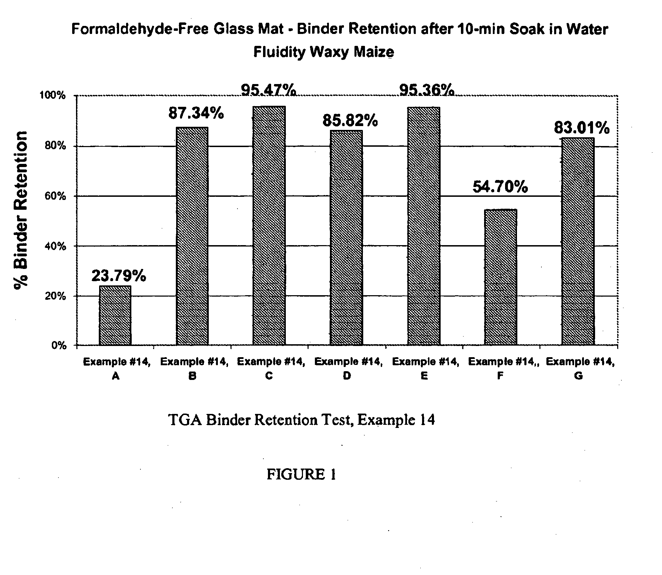

The data in Figure 1 shows that silane can dramatically increase the adhesion of the binder to fiberglass substrate as shown by higher binder retention.

Example 15- (Comparison)

An OSA modified waxy maze starch was tested with STMP and tripoly-phosphate as cross-linkers (20 weight percent of the starch) and urea as a catalyst for wet strength using the protocol detailed in Example 10. The fiberglass mats were cured at 180°C for 20 minutes. Since all the binders cured at pH's greater than 3, the systems of the present invention are not corrosive.

Table, 15-

| Ingredients (weight % in solution) | A | B | C | D |
|---|---|---|---|---|
| OSA-modified waxy maize (27.8%) in [g] | 10 | 10 | 10 | 10 |
| STMP (10%) in [g] | 5.56 | 5.56 | - | - |
| Tripolyphosphate in [g] | - | - | 5.56 | 5.56 |
| Urea (40% solution) in [g] | 0.167 | 0.417 | 0.167 | 0.417 |
| DI Water in [g] | 30 | 30 | 30 | 30 |
| pH of binder solution | 10.10 | 10.87 | 10.91 | 10.95 |
| % Solids in binder solution | 7.4% | 7.6% | 7.4% | 7.6% |
| Weight% Catalyst based on weight of starch and cross linker | 2% | 5% | 2% | 5% |
| binder on mat in % | 44.2% | 47.8% | 45.3% | 46.0% |
| Wet strength test | 3.5 | 3.5 | 3 | 3 |

The data in Table 15 indicate that urea is a good catalyst when using STMP and tripolyphosphate as cross-linkers.

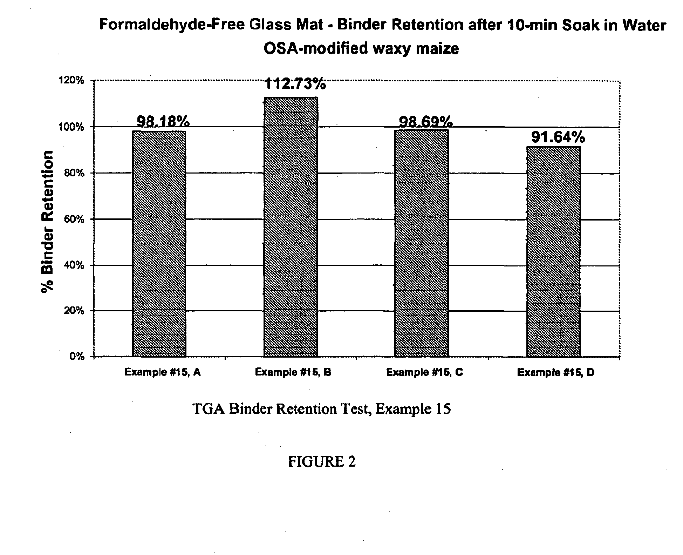

The Binder Retention of the fiberglass mats was tested by the TGA method described in Example 14. The data in Figure 2 supported the above conclusion that urea is a good catalyst when using STMP and tripolyphosphate as cross-linkers.

Example 16 - (Comparison)

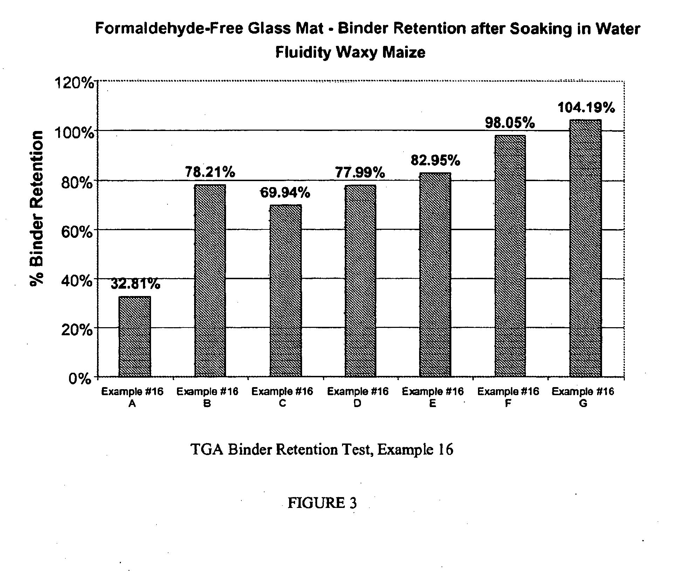

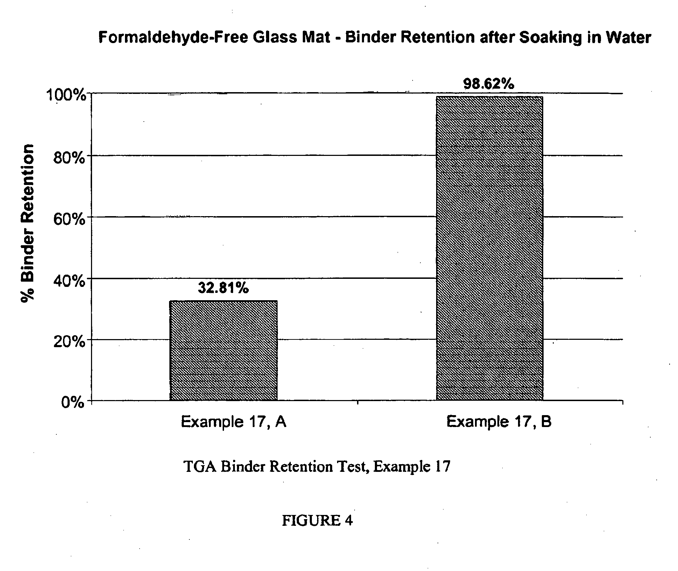

A fluidity waxy maize starch was tested without crosslinker and with SC740 and PC 6130 as crosslinkers, for wet strength using the protocol detailed in Example 10, and for Binder Retention using the TGA method detailed in Example 14. The crosslinkers were added at 1 and 10 weight percent of the starch respectively. The fiberglass mats were cured at 180°C for 20 minutes in an oven, and at pH's greater than 3. Both wet strength test and TGA Binder Retention test showed, as illustrated in Figures 3 and 4, respectively, that the starch without external crosslinker did not have good binding to the fiberglass substrate. With the addition of SC740 and PC6130, the binding of the starch to fiberglass substrate significantly increased as demonstrated by higher wet strength and higher Binder Retention value.

Table 16-

| Chemicals | A | B | C | D | E | F | G |
|---|---|---|---|---|---|---|---|
| Fluidity waxy maize | 10 | 20 | 20 | 20 | 20 | 20 | 20 |
| (26%) in [g] | | | | | | | |
| SCRIPSET SC740 (10%) in [g] | | 0.514 | 2.57 | 5.14 | | | |
| PC 6130 (10%) in [g] | | | | | 0.514 | 2.57 | 5.14 |
| DI Water in [g] | 22 | 50 | 55 | 55 | 65 | 65 | 70 |
| Weight % crosslinker based on weight of starch | 0% | 1% | 5% | 10% | 1% | 5% | 10% |
| pH | 6.38 | 8.4 | 8.69 | 8.88 | 9.05 | 8.02 | 8.01 |
| Wet strength test | 2 | 4 | 5 | 4.5 | 4.5 | 5 | 5 |

Example 17- (Comparison)

Two non-amylose starches (fluidity waxy maize and OSA-modified waxy maize) were tested without externally-added crosslinker for wet strength using the protocol detailed in Example 10, and for Binder Retention using the TGA method detailed in Example 14. The fiberglass mats were cured at 180°C for 20 minutes in an oven, and at pH's greater than 3. Without externally added crosslinker, OSA-modified waxy maize showed good binding to fiberglass as shown by high value of wet strength and high value of Binder Retention, as shown in Figure 4. On the other hand, fluidity waxy maize showed poorer binding (low wet strength and low Binder Retention). One possible explanation is that divalent cations such as $Ca^{2+}$ and $Mg^{2+}$ that are present *in-situ* in processing water functioned as ionic crosslinkers to crosslink between the anionic sites on the OSA-modified waxy maize, but did not crosslink the fluidity waxy maize.

Table 17-

| Chemicals | A | B |
|---|---|---|
| Fluidity waxy maize (25.7% solid) in [g] | 10 | - |
| OSA modified waxy maize (27.8% solid) in [g] | - | 10 |
| DI Water in [g] | 22 | 25 |
| pH | 6.38 | 5.48 |
| Wet strength test | 2 | 3.5 |

The above Examples 8-17 illustrate that a non-amylose starch with a crosslinker has similar performance to a formaldehyde-based binder system. The non-amylose starch is the primary raw material in the formaldehyde free binder system and therefore the binder is economical, green, renewable and sustainable. Furthermore, the binder can be cured at neutral pH eliminating the corrosion issues seen in other formaldehyde free binder systems. Furthermore, the aqueous formaldehyde free binders of this invention have low viscosity and excellent pot life. This formaldehyde free binder can be combined with a variety of substrates to produce composite materials that do not have any emission issues.

Example 18- (Comparison)

Two stabilized starches were mixed with a series of cross-linkers in a binder solution and applied to glass mats using the protocol described below. The two starches were a hydroxypropylated regular corn with a WF of 70 (Starch A) and a hydroxypropylated tapioca with a WF of 80 (Starch B) available from National Starch and Chemical, Bridgewater, New Jersey. The starches were cooked by taking 80 g of the dry powder and dispersing in 320 g of water and cooking at 90° C for one hour to produce a 20% aqueous solution. The binder solutions were prepared by mixing these starch solutions with dilute solutions of the cross-linkers as listed in Table 18 below.

Table 18-

| Binder solution | | | | | | | | | | |
|---|---|---|---|---|---|---|---|---|---|---|
| Ingredients | A | B | C | D | E | F | G | H | I | J |
| 20% solution of Starch B (g) | 20 | 20 | 20 | 20 | 20 | - | - | - | - | - |
| 20% solution of Starch A (g) | - | - | - | - | - | 20 | 20 | 20 | 20 | 20 |
| STMP 10% solution (g) | - | 4 | - | - | - | - | 4 | - | - | - |
| Sodium Borate Decahydrate 5% solution (g) | - | - | 8 | - | - | - | - | 8 | - | - |
| Scripset®740 10% solution (g) | - | - | - | 4 | - | - | - | - | 4 | - |
| Polycup® 6130 10% solution (g) | - | - | - | - | 4 | - | - | - | - | 4 |
| Dilution Water in [g] | 10 | 10 | 10 | 10 | 10 | 10 | 10 | 10 | 10 | 10 |

(continued)

| Binder solution | | | | | | | | | | |
|---|---|---|---|---|---|---|---|---|---|---|
| Ingredients | A | B | C | D | E | F | G | H | I | J |
| pH of the binder solution | 4.49 | 10.56 | 9.08 | 8.79 | 8.38 | 5.22 | 10.02 | 9.04 | 8.69 | 8.07 |
| solids of the binder solution | 13.3% | 12.9% | 11.6% | 12.9% | 12.9% | 13.3% | 12.9% | 11.6% | 12.9% | 12.9% |
| Wet strength test | 1-2 | 1-2 | 1 | 4-5 | 4-5 | 1-2 | 1 | 1-2 | 5 | 5 |
| STMP - sodium trimetaphosphate POLYCUP® 6130 - polyamide-epichlorohydrin crosslinking agent available from Hercules, Inc., Wilinington, Delaware SCRIPSET® SC740 - Ammonium solution of esterified styrene maleic-anhydride co-polymer available from Hercules, Inc., Wilmington, Delaware | | | | | | | | | | |

The test protocol involves diluting the binder to between 11 and 13% solids as listed in the Table 18 above. Glass microfiber filter paper sheets (203 x 25.4 cm, Cat No. 66227, Pall Corporation., Ann Arbor, Michigan) are then dipped into the binder solution and run through a roll padder. The coated sheets are then cured at 180 °C for 20 minutes in an oven. Typical add-on values are 40%, dry binder weight as a percentage of filter paper weight. The cured sheets are then soaked in water for 10 minutes. The cured sheets were tested by pulling apart by hand. The wet tensile strength was given a qualitative rating on a scale of 1 to 5. 1 being no wet tensile strength, 5 being wet tensile strength similar to dry tensile strength. A formaldehyde based binder would be expected to have a wet strength of 1 to 2 in this test. The data in Table 18 indicate that the stabilized low amylose starches mixed with crosslinkers are good formaldehyde free binders when cured in the pH range 4.5 to 10.5.

The "Binder Retention" after the fiberglass mats were soaked in water was tested by a TGA ramp test (ramp rate = 10°C/min, ramping from room temperature to 600°C, with $N_2$ as purging gas). The glass amts were soaked in DI water for 10-minute followed by drying at ambient condition overnight. The TGA test was conducted on original un-soaked fiberglass mats and the soaked/re-dried fiberglass mats. TGA weight loss at 600C was registered as the "Binder Content" for each fiberglass mat. "Binder Retention" of a fiberglass mat as defined in Example 14.

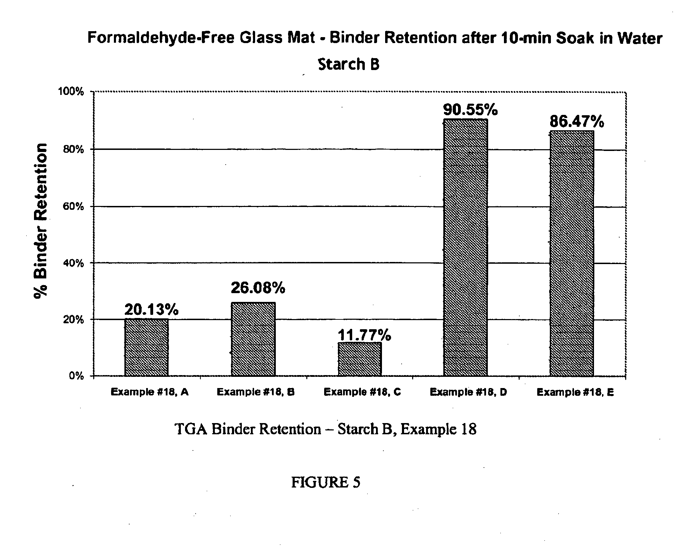

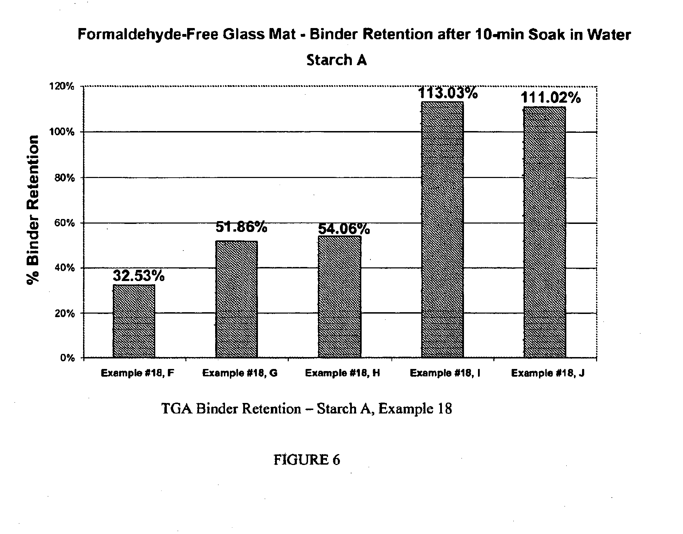

The Binder retention of the fiberglass mats in Example 18 was measured using this TGA method, and the results are summarized in Figure 5 and Figure 6. One can clearly see that crosslinked Starch B and crosslinked Starch A by crosslinkers SC740 and PC 6130 had strong binding to the fiberglass, as indicated by high Binder Retention values. Crosslinkers STMP and Sodium Borate could also improve binder of stabilized low amylose starches to fiberglass, especially for Unipure GA.

Example 19- (Comparison)

A stabilized starch (Starch B) was mixed with a series of cross-linkers and additives in the amounts detailed in Table 19 to form a binder solution and applied to glass mats using the protocol described in Example 18. The starch was cooked by taking 80 g of the dry powder and dispersing in 320 g of water and cooking at 90° C for one hour to produce a 20% aqueous solution.

Table 19-

| Ingredients | A | B | C | D | E |
|---|---|---|---|---|---|
| 20% solution of Starch B in [g] | 20 | 20 | 20 | 20 | 20 |
| 10% solution of STMP in [g] | 8 | 8 | - | - | - |
| 40% solution of Urea in [g] | 0.1 | - | - | - | - |
| Dow Corning 75SF Silicone Emulsion (55%) in [g] | - | 0.145 | - | - | - |
| 20% solution of PVOH (Celvol 103) in [g] | - | - | 4 | - | - |
| Silquest® A171 in [g] | - | - | - | 0.12 | - |

(continued)

| Ingredients | A | B | C | D | E |
|---|---|---|---|---|---|
| Silquest® A1524 in [g] | - | | | | 0.12 |
| DI Water in [g] | 15 | 15 | 15 | 15 | 15 |
| pH of the binder solution | 10.32 | 10.42 | 5.78 | 10.34 | 10.45 |
| % Solids in the binder solution | 11.2% | 11.3% | 12.3% | 11.7% | 11.7% |
| Weight percent Binder based on weight of mat | 76.8 | 74.5 | 84.8 | 76.7 | 72.9 |
| Wet strengthtest | 1 | 4 | 2 | 5 | 4 |
| Silquest A1524 is gamma Ureidopropyltrimethoxysilane available form GE Advanced Materials, Wilton, Connecticut. Silquest A171 is Vinyltrimethoxysilane available form GE Advanced Materials, Wilton, Connecticut. | | | | | |

The data in Table 19 indicate that the polyvinylalcohol (PVOH) and the silicones are very good hydrophobic additives that improve wet tensile strength. On addition, the silanes are excellent at both crosslinking the stabilized low amylose starches and adhering the binder to the fiberglass substrate as evidenced by the excellent wet strength performance.

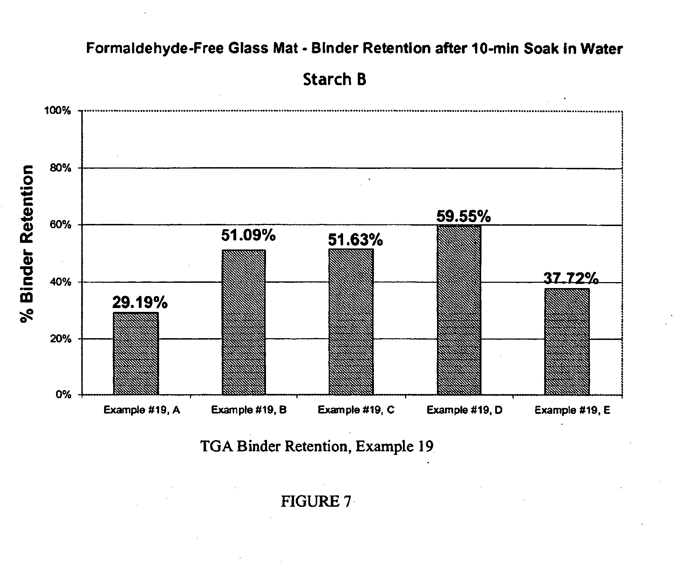

Binder Retention was measured using the TGA method detailed in Example 14, and the results are summarized in Figure 7. The data in Figure 7 indicate that silicone, silane and PVOH improved the binding of Starch B to fiberglass substrate.

Example 20- (Comparison)

Medium density fiberboard (MDF) samples were made in the lab using the following protocol:

850 g of wood pulp was taken in a rotary mixer. The binder solution is sprayed onto the wood pulp with constant mixing. The binder is a mixture of a cooked 20% solution of Starch B, 10 weight percent of active Polycup 6130 (cross-linker available from Hercules) based on the weight of the starch and 5 weight percent of active silicone (Dow Coming 75SF Silicone Emulsion). The mixed wood pulp with binder is fed through a screen into a mold which is 35 x 25 x 10 $cm^3$ in size, such that the wood pulp is evenly distributed in the mold. A 150 1b weight is then placed on the preformed medium density fiberboard for five minutes. The medium density fiberboard is then cured by placing it between the heating plates of a pressurized chamber. The pressure in this chamber is set to 2300 to 2800 lbs/in$^2$ and the temperature is maintained at 160 °C. The cured medium density fiberboard using the binder of this invention was found to have acceptable physical properties.

Example 21- (Comparison)

A series of formaldehyde free binder solutions were prepared by mixing stabilized low amylose starch solutions with aqueous solutions of cross-linker. These solutions contained 20 weight percent cross-linker based on the weight of the starch. These solutions were then diluted with water to obtain a final solution containing 10% solids. The viscosity (see Table 20 below) of these formaldehyde free binder solutions were measured at 25° C both immediately and after a 24-hour period.

<p style="text-align:center">Table 20-</p>

| Ingredient (% solids in solution) | A | B | C | D |
|---|---|---|---|---|
| Starch B (20.0%) in [g] | 150 | 104.5 | 104.5 | |
| Fluidity Hylon Vii (10%) in [g] | | | | 300 |
| SCRIPSET SC740 (10%) in [g] | | 41.5 | | |
| POLYCUP®6130[1] (10%) in [g] | | | 41.5 | |
| DI Water in [g] | 150 | 104.5 | 104.5 | |
| | | | | |

(continued)

| Ingredient (% solids in solution) | A | B | C | D |
|---|---|---|---|---|
| pH | 4.5 | 9.0 | 9.3 | 12 |
| % Solids in Blinder solution | 10 | 10 | 10 | 10 |
|  |  |  |  |  |
| Viscosity mPa·s (cPs) t= 0 | 28.7 | 35.2 | 30.8 | gel* |
| Viscosity mPa·s (cPs) t= 72 hrs | 29.8 | 42 | 137.6 | gel* |

[1]POLYCUP® 6130- polyamide-epichlorohydrin crosslinking agent available from Hercules, Inc., Wihnington, Delaware
*forms a gel and viscosity is so high that it cannot be measured.

These data in Table 20 indicate that the combinations of stabilized low amylose starches and cross-linker's have viscosities of less than 200 cPs at 25° C as 10% solutions. Moreover these viscosities are stable over a 72 hour period, since the solutions do not show a significant rise in viscosity (viscosity increase is less than 500 percent at 25° C even over a period of 3 days). By contrast, high amylose starches (even without the presence of cross-linker) form a gel at 25°C which makes it difficult to apply these materials by conventional means such as spraying. Therefore, the combination of stabilized low amylose starches and cross-linkers have low viscosities so that they can be applied by conventional means such as spraying. In addition, the viscosity does not change drastically with time allowing for a good pot life.

The above Examples 18-21 illustrate that a stabilized low amylose starch with a crosslinker has similar performance to a formaldehyde-based binder system. The stabilized low amylose starch is the primary raw material in the formaldehyde free binder system and therefore the binder is economical, green, renewable and sustainable. Furthermore, the binder can be cured at neutral pH eliminating the corrosion issues seen in other formaldehyde free binder systems. Furthermore, the aqueous formaldehyde free binders of this invention have low viscosity and excellent pot life. These formaldehyde free binders can be combined with a variety of substrates to produce composite materials that do not have any emission issues.

Although the present invention has been described and illustrated in detail, it is to be understood that the same is by way of illustration and example only, and is not to be taken as a limitation. The scope of the present invention is to be limited only by the terms of the claims presented hereafter.

## Claims

1. Composite comprising:

    a formaldehyde free binder comprising at least one polysaccharide and at least one polysaccharide crosslinker; and
    a mineral wool or lignocellulosic substrate, wherein the at least one polysaccharide is a non-starch polysaccharide selected from the group consisting of guar, alginates, hydroxy propyl cellulose or carboxy methylcellulose.

2. Composite according to claim 1, wherein the mineral wool is fiberglass, ceramic fibers, stone wool or rock wool.

3. Composite according to claim 1, wherein the lignocellulosic substrate is wood in the form of particles or fragments.

4. Composite according to claim 1, wherein the polysaccharide crosslinker is chosen from adipic/acetic mixed anhydride, epichlorohydrin, sodium trimetaphosphate, sodium trimetaphosphate/sodium tripolyphosphate, and phosphorous oxychloride, polyamide-epichlorohydrin crosslinking agents, anhydride containing polymers. Cyclic Amide Condensates, zirconium and titanium complexes, adipic acid dihydrazide, di-epoxides and polyepoxide compounds, di-functional monomers, dianhydrides, acetals, polyfunctional silanes, blocked aldehydes, polycarboxylates, boron compounds and combinations thereof.

5. Composite according to claim 1, wherein the weight percent of the polysaccharide crosslinker in the formaldehyde free binder is from 0.1 to 70 percent.

6. Composite according to claim 1, wherein the formaldehyde free binder further comprises an additive.

7. Composite according to claim 6, wherein the additive at least provides moisture or water resistance.

8. Composite according to claim 1, wherein the formaldehyde free binder further comprises a catalyst

9. Composite according to claim 1, wherein the weight percent of the binder is less than 50 weight percent of the weight of the composite.

10. composite according to claim 1, wherein the binder is an aqueous solution and the pH of the aqueous solution is greater than 3.

11. Method of forming a composite comprising:

preparing a formaldehyde free binder as presented in any one of claims 1-10;
depositing the formaldehyde free binder onto a substrate as presented in any one of claims 1-10;
and curing the binder.

**Patentansprüche**

1. Verbundstoff, umfassend:

ein formaldehydfreies Bindemittel, umfassend mindestens ein Polysaccharid und mindestens einen Polysaccharidvernetzer; und
ein Mineralwolle- oder Lignocellulosesubstrat, wobei das mindestens eine Polysaccharid ein Nicht-Stärke-Polysaccharid, ausgewählt aus der Gruppe bestehend aus Guar, Alginaten, Hydroxypropylcellulose oder Carboxymethylcellulose ist.

2. Verbundstoff gemäß Anspruch 1, wobei die Mineralwolle Glasfaser, Keramikfasern, Steinwolle oder Rockwool ist.

3. Verbundstoff gemäß Anspruch 1, wobei das Lignocellulosesubstrat Holz in Form von Partikeln oder Fragmenten ist.

4. Verbundstoff gemäß Anspruch 1, wobei der Polysaccharidvernetzer ausgewählt ist aus gemischten Adipinsäure/Essigsäure-Anhydrid, Epichlorhydrin, Natriumtrimetaphosphat, Natriumtrimetaphosphat/Natriumtripolyphosphat, und Phosphoroxychlorid, Polyamid-Epichlorhydrin-Vernetzungsmitteln, Anhydrid-enthaltenden Polymeren, cyclischen Amidkondensaten, Zirkonium- und Titan-Komplexen, Adipinsäuredihydrazid, Diepoxiden und Polyepoxidverbindungen, di-funktionalen Monomeren, Dianhydriden, Acetalen, polyfunktionalen Silanen, latenten Aldehyden, Polycarboxylaten, Borverbindungen und Kombinationen davon.

5. Verbundstoff gemäß Anspruch 1, wobei der Gewichtsprozentsatz des Polysaccharidvernetzers in dem formaldehydfreien Bindemittel von 0,1 bis 70 Prozent beträgt.

6. Verbundstoff gemäß Anspruch 1, wobei das formaldehydfreie Bindemittel darüber hinaus ein Additiv umfasst.

7. Verbundstoff gemäß Anspruch 6, wobei das Additiv mindestens Feuchtigkeits- oder Wasserbeständigkeit verleiht.

8. Verbundstoff gemäß Anspruch 1, wobei das formaldehydfreie Bindemittel darüber hinaus einen Katalysator umfasst.

9. Verbundstoff gemäß Anspruch 1, wobei der Gewichtsprozentsatz des Bindemittels weniger als 50 Gewichtsprozent des Gewichts des Verbundstoffs beträgt.

10. Verbundstoff gemäß Anspruch 1, wobei das Bindemittel eine wässrige Lösung ist und der pH-Wert der wässrigen Lösung größer als 3 ist.

11. Verfahren zum Erzeugen eines Verbundstoffs, umfassend:

Herstellen eines formaldehydfreien Bindemittels gemäß einem der Ansprüche 1 bis 10;

Auftragen des formaldehydfreien Bindemittels auf ein Substrat wie in einem der Ansprüche 1 bis 10 dargelegt; und Härten des Bindemittels.

**Revendications**

1. Composite comprenant :

   un liant sans formaldéhyde comprenant au moins un polysaccharide et au moins un agent de réticulation de polysaccharide ; et
   une laine minérale ou un substrat lignocellulosique, dans lequel le au moins un polysaccharide est un polysaccharide non amylacé choisi dans le groupe constitué de la gomme de guar, des alginates, de l'hydroxy propyl cellulose et de la carboxyl méthylcellulose.

2. Composite selon la revendication 1, dans lequel la laine minérale est une fibre de verre, des fibres céramiques ou une laine de roche.

3. Composite selon la revendication 1, dans lequel le substrat lignocellulosique est du bois sous la forme de particules ou de fragments.

4. Composite selon la revendication 1, dans lequel l'agent de réticulation de polysaccharide est choisi parmi l'anhydride adipique/acétique mixte, l'épichlorhydrine, le trimétaphosphate de sodium, le trimétaphosphate de sodium/tripolyphosphate de sodium et l'oxychlorure de phosphore, les agents de réticulation à base de polyamide/épichlorhydrine, les polymères contenant des anhydrides, les condensats d'amide cyclique, les complexes de zirconium et de titane, le dihydrazide d'acide adipique, les diépoxydes et les composés de polyépoxyde, les monomères difonctionnels, les dianhydrides, les acétals, les silanes polyfonctionnels, les aldéhydes bloqués, les polycarboxylates, les composés du bore et leurs combinaisons.

5. Composite selon la revendication 1, dans lequel le pourcentage en poids de l'agent de réticulation de polysaccharide dans le liant sans formaldéhyde est de 0,1 à 70 pour cent.

6. Composite selon la revendication 1, dans lequel le liant sans formaldéhyde comprend en outre un additif.

7. Composite selon la revendication 6, dans lequel l'additif fournit au moins une résistance contre l'humidité ou l'eau.

8. Composite selon la revendication 1, dans lequel le liant sans formaldéhyde comprend en outre un catalyseur.

9. Composite selon la revendication 1, dans lequel le pourcentage en poids du liant est inférieur à 50 pour cent en poids du poids du composite.

10. Composite selon la revendication 1, dans lequel le liant est une solution aqueuse et le pH de la solution aqueuse est supérieur à 3.

11. Procédé de formation d'un composite, comprenant :

    la préparation d'un liant sans formaldéhyde selon l'une quelconque des revendications 1 à 10 ;
    le dépôt du liant sans formaldéhyde sur un substrat selon l'une quelconque des revendications 1 à 10 ;
    et le durcissement du liant.

**Formaldehyde-Free Glass Mat - Binder Retention after 10-min Soak in Water**
**Fluidity Waxy Maize**

TGA Binder Retention Test, Example 14

FIGURE 1

Formaldehyde-Free Glass Mat - Binder Retention after 10-min Soak in Water
OSA-modified waxy maize

TGA Binder Retention Test, Example 15

FIGURE 2

**Formaldehyde-Free Glass Mat - Binder Retention after Soaking in Water Fluidity Waxy Maize**

TGA Binder Retention Test, Example 16

FIGURE 3

**Formaldehyde-Free Glass Mat - Binder Retention after Soaking in Water**

TGA Binder Retention Test, Example 17

FIGURE 4

**Formaldehyde-Free Glass Mat - Binder Retention after 10-min Soak in Water**
**Starch B**

TGA Binder Retention – Starch B, Example 18

FIGURE 5

**Formaldehyde-Free Glass Mat - Binder Retention after 10-min Soak in Water**

**Starch A**

TGA Binder Retention – Starch A, Example 18

FIGURE 6

**Formaldehyde-Free Glass Mat - Binder Retention after 10-min Soak in Water**

**Starch B**

TGA Binder Retention, Example 19

FIGURE 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0817925 A
- WO 9711109 A
- EP 1193288 A
- US 4625029 A
- US 4656296 A
- US 4695606 A
- US 5895804 A

**Non-patent literature cited in the description**

- **RUTENBERG, M. W. ; D. SOLAREK.** Starch Derivatives: Production and Uses. Acad. Press Inc, 1984, 324-332
- **WÜRZBURG, O.B.** Modified Starches: Properties and Uses. CRC Press, 1986, 42-45245-246
- Production and uses of crosslinked starch. **HULLINGER, C. H.** Starch, Chemistry and Technology. Academic Press, 1967